# EUROPÄISCHE PATENTSCHRIFT

(11) **EP 2 276 806 B1**
(45) Veröffentlichungstag und Bekanntmachung des Hinweises auf die Patenterteilung: **15.03.2017**
(21) Anmeldenummer: 09745647.9
(22) Anmeldetag: 21.04.2009
(51) Int. Cl.: C09K 3/10, E04D 5/06, B23B 27/12, C08L 27/06, C08L 33/06, C08L 51/00, C08L 67/02

(54) **DICHTUNGSBAHN UND DACHBAHN**
SEALING SHEET AND ROOFING SHEET
BANDE D'ÉTANCHÉITÉ ET BANDE DE TOITURE

(30) Priorität: 16.05.2008 DE 102008024016
(43) Veröffentlichungstag der Anmeldung: 26.01.2011
(73) Patentinhaber: Icopal Danmark A/S, 2730 Herlev (DK)
(72) Erfinder: NIEMANN, Klaus, 65199 Wiesbaden (DE); SIMONIS, Udo, 63549 Ronneburg (DE)
(74) Vertreter: Stoffregen, Hans-Herbert
(86) Internationale Anmeldenummer: PCT/EP2009/054713
(87) Internationale Veröffentlichungsnummer: WO 2009/138314

(56) Entgegenhaltungen:
- EP-A- 0 134 389
- EP-A- 0 675 163
- DATABASE WPI Week 199348 Thomson Scientific, London, GB; AN 1993-383208 XP002537932 & JP 05 287149 A (HAYAKAWA RUBBER KK) 2. November 1993 (1993-11-02)
- DATABASE WPI Week 198148 Thomson Scientific, London, GB; AN 1981-88149D XP002537933 & JP 56 133165 A (LONSEAL CORP) 19. Oktober 1981 (1981-10-19)
- DATABASE WPI Week 199712 Thomson Scientific, London, GB; AN 1997-130534 XP002537934 & KR 950 006 264 B1 (HANHWA CHEM CO LTD) 13. Juni 1995 (1995-06-13)
- DATABASE WPI Week 198330 Thomson Scientific, London, GB; AN 1983-719421 XP002537935 & JP 58 101126 A (HITACHI LTD) 16. Juni 1983 (1983-06-16)
- DATABASE WPI Week 199723 Thomson Scientific, London, GB; AN 1997-256139 XP002537936 & JP 09 087976 A (HAYAKAWA RUBBER KK) 31. März 1997 (1997-03-31)

## Beschreibung

Die vorliegende Erfindung betrifft eine Dichtungsbahn.

Dichtungsbahnen, insbesondere Dachabdichtungsbahnen werden im Baubereich vor allem bei der Abdichtung von Flachdächern, jedoch ebenso bei der Abdichtung von Übergangen von einzelnen Bauteilen eingesetzt. Durch diesen Anwendungsbereich sind sie stark wechselnden Witterungsbedingungen ausgesetzt, woraus sich hohe Anforderungen an die eingesetzten Materialien ergeben. Insbesondere müssen diese Materialien gegenüber starken Temperaturschwankungen, gegen Feuchtigkeit, UV-Bestrahlung sowie starkem Wind, Schlagregen, Hagel und Schnee beständig sein. Ferner müssen die Dichtungsbahnen eine ausreichende Kerbschlagunempfindlichkeit aufweisen. Des Weiteren müssen die einzusetzenden Materialien unter den oben genannten Bedingungen auch alterungsbeständig sein. Schließlich müssen die Dichtungsbahnen eine ausreichende Flexibilität auch bei niedrigen Temperaturen besitzen, um eine gute Verarbeitbarkeit zu jeder Jahreszeit zu ermöglichen.

Üblicherweise werden Dachabdichtungsbahnen auf der Basis von PVC eingesetzt, welche zusätzlich auch einen Weichmacher sowie unterschiedliche Stabilisatoren und Füllstoffe enthalten können. Aufgrund der gesundheitlichen Bedenken gegen den Einsatz niedermolekularer Weichmacher werden mittlerweile in PVC-Dichtungsbahnen so genannten Polymerweichmacher eingesetzt. Der Einsatz dieser Polymerweichmacher hat jedoch den Nachteil, dass die Glasübergangstemperatur der mit diesem Weichmacher behandelten Polymermischung verhältnismäßig hoch ist. Dadurch lassen sich Dichtungsbahnen mit solchen Weichmachersystemen bei kühler Witterung schlecht verarbeiten und darüber hinaus führt die verhältnismäßig große Härte bei niedrigen Temperaturen zu einer erhöhten Kerbschlagempfindlichkeit. Dadurch können die Bahnen in der Kälte leicht beschädigt werden beispielsweise durch Anschüttungen von Kies oder bei unvorsichtiger Handhabung auf der Bausteile wodurch die Dichtungseigenschaften gefährdet sind.

Ein weiteres Problem der polymerweichgemachten Dichtungsbahnen besteht darin, dass die Alterungsbeständigkeit unter den oben genannten Witterungseinflüssen nicht in jedem Falle zufrieden stellend ist, da die weichmachende Wirkung mit der Zeit nachlässt und die hieraus resultierende Verhärtung der Dichtungsbahn ebenfalls zu einer Erhöhung der Kerbschlagempfindlichkeit mit den oben dargestellten Konsequenzen führt.

Zur Herstellung von Dachdichtungsbahnen, die eine verbesserte Witterungsstabilität aufweisen und zudem bei unterschiedlichsten Temperaturen gut verarbeitet werden können, wird in der EP 1 141 055 A1 die Verwendung eines komplexen kautschukartigen Polymers auf Basis von Butylacrylat und nicht weniger als fünf weiteren Bestandteilen vorgeschlagen. Dieses lässt sich zur Herstellung von Dachdichtungsbahnen einsetzen, die zusätzlich Polyvinylchlorid und einen Weichmacher enthalten, wobei als Weichmacher die üblichen bekannten mit PVC verträglichen Weichmacher eingesetzt werden können, insbesondere auch niedermolekulare Weichmacher. Durch Einsatz des genannten Polymers lässt sich insbesondere die Witterungsbeständigkeit verbessern. Nachteilig ist jedoch, dass das Polymer hochkomplex aufgebaut und damit dessen Herstellung aufwändig und kostenintensiv ist.

Die JP-A-05 287149 beschreibt Dichtungsbahnen, bei denen zwingend ein Copolymer als Grundpolymer enthalten ist.
Das mittlere Melelkulargewicht des polymeren Weichmachers liegt bei 2600.

In der JP-A-56 133165 werden Schichten beschrieben, die monomere Weichmacher mit einem Molekulargewicht enthalten, das üblicherweise bei 200 liegt.

Der KR-A-950 006 264 sind komplex aufgebaute Harze zu entnehmen, die Acrylate mit einem Gewichtsanteil von maximal 4 % enthalten und somit als Prozesshilfe dienen.
Ein in der JP-A-58 101126 verwendetes Acrylat ist gleichfalls ausschließlich als Prozesshilfe bestimmt.

Die JP-A-09 087976 beschreibt Bahnen, die niedermolekulare Weichmacher enthalten, um das Molekulargewicht zu reduzieren.

Eine der EP 0 675 163 A1 zu entnehmende Elastomer-Zusammensetzung weist ein Acrylat auf, das als Prozesshilfe dient.

Die Aufgabe der vorliegenden Erfindung besteht darin, eine Dichtungsbahn zu schaffen, die eine gute Verarbeitbarkeit und hohe Kerbschlagzähigkeit bei niedrigen Temperaturen sowie eine hohe Witterungsbeständigkeit besitzt. Weiterhin sollen die Bestandteile der Zusammensetzung zur Herstellung der Dichtungsbahn einfach und kostengünstig herstellbar und kommerziell verfügbar sein. Die Aufgabe wird durch die Merkmale des Anspruchs 1 gelöst.

Überraschenderweise wurde gefunden, dass sich mit einer Zusammensetzung, enthaltend ein Grundpolymer, einen polymeren Weichmacher sowie ein Polyacrylat, wobei das Grundpolymer Polyvinylchlorid ist, und der polymere Weichmacher ein Adipinsäurepolyester mit einem mittleren Molekulargewicht von 5.000 bis 8.000 ist und die Zusammensetzung zwischen 8 Gew.-% und 25 Gew.-% an Polyacrylat enthält. Dichtungsbahnen herstellen lassen, die sehr gute Eigenschaften im Bezug auf die Kerbschlagzähigkeit insbesondere bei niedrigen Temperaturen bei gleichzeitig sehr guter Alterungsbeständigkeit aufweisen.

Unter einer Dichtungsbahn wird im Sinne der vorliegenden Erfindung ein bei Raumtemperatur flexibles Flächengebilde verstanden, welches üblicherweise eine Dicke von 5 mm oder weniger aufweist. Die Herstellung derartiger Folien erfolgt in an sich bekannter Weise, das heißt durch Kalandrieren oder Extrusion durch eine Breitschlitzdrüse. Die Folien können dabei im Allgemeinen eine Stärke von 0,1 bis 5 mm vorzugsweise 0,3 bis 3 mm besonders bevorzugt 0,7 bis 2,0 mm aufweisen.

Die Zusammensetzung wird durch Mischen der einzelnen Komponenten bei gleichzeitiger Erwärmung auf Temperaturen beispielsweise im Bereich von etwa 90 bis 150°C, insbesondere von etwa 110 °C bis etwa 130 °C hergestellt. Die Wärme entsteht in der Masse selbst durch Reibung in schnelllaufenden Mischern; alternativ hierzu oder zusätzlich kann die Masse auch von Außen beheizt werden, um die gewünschte Verarbeitungstemperatur einzustellen. Solche Ansätze ergeben trockene, vorgesinterte, rieselfähige Massen, die leichter und schneller verarbeitet werden können. Nach dieser sogenannten dry-blend-Technik hergestellten PVC-P-Massen können direkt, also ohne den Umweg über das Granulat zur Extrusion verwendet werden. Die optimale Temperatur hängt von der genauen Zusammensetzung ab und kann vom Fachmann in wenigen Versuchen ermittelt werden.

Die Zusammensetzung zur Herstellung einer Dichtungsbahn enthält Polyvinylchlorid als Grundpolymer. Das erfindungsgemäß eingesetzte Grundpolymer besitzt üblicherweise eine Glasübergangstemperatur T_{g} von mehr als 50°C, bevorzugt mehr als 60°C.

Das Grundpolymer wird bei den Zusammensetzungen beispielsweise in Anteilen von 20 bis 60 Gew.-%, bevorzugt von 25 bis 40 Gew.-% eingesetzt. Dichtungsbahnen aus Zusammensetzungen mit solchen Anteilen an Grundpolymer lassen sich besonders gut zu Dichtungsbahnen weiterverarbeiten. Sämtliche Angaben in Gew.-% beziehen sich hierbei auf die gesamte Zusammensetzung.

Aufgrund der Glasübergangstemperatur der eingesetzten Grundpolymere ist für die Herstellung einer Dichtungsbahn auf Basis dieser Grundpolymere der Einsatz von Weichmacher erforderlich. Die vorliegende Erfindung sieht vor, hierfür polymere Weichmacher auf Basis von Adipinsäurepolyestern einzusetzen. Diese haben gegenüber niedermolekularen Weichmachern den Vorteil, dass sie nicht so leicht aus dem Grundpolymer durch Witterungseinflüsse ausgewaschen werden oder durch Hitzeeinwirkung verdunsten, was zu einer Versprödung des Folienmaterials führen würde. Außerdem sind die polymeren Weichmacher nach jetzigem Kenntnisstand aus medizinischer Sicht gesundheitlich weit weniger bedenklich als die Vielzahl der niedermolekularen Weichmacher.

Der Adipinsäurepolyester wird bei den Zusammensetzungen beispielsweise in Anteilen von 20 bis 45 Gew.-%, bevorzugt von 25 bis 35 Gew.-% eingesetzt. Dichtungsbahnen aus Zusammensetzungen mit solchen Anteilen an Adipinsäurepolyester weisen eine besonders hohe Kerbschlagzähigkeit und eine hohe Schlagzugzähigkeit auf. Die Schlagzugzähigkeit wird in Anlehnung an DIN EN ISO 8256 sowie gemäß DIN 53453 ermittelt.

Ebenso wird festgestellt, dass die Kältebruchtemperatur im Vergleich mit monomerweichgestellten Dichtungsbahnen deutlich höher ist. Diese wird bestimmt nach der DIN 53372 "Bestimmung der Kältebruchtemperatur von Folien aus Polyvinylchlorid (PVC) weich". Die Norm wurde zwischenzeitlich zurückgezogen und ersetzt durch DIN EN 1876-2:1998-01 "Mit Kautschuk oder Kunststoff beschichtete Textilien - Prüfungen bei niedrigen Temperaturen - Teil 2: Schlaufen-Schlagprüfung; Deutsche Fassung EN 1876-2:1997". Ferner zeigen die Dichtungsbahnen aus den Zusammensetzungen ein verbessertes Perforationsverhalten gegenüber den aus dem Stand der Technik bekannten Dichtungsbahnen. Wiederum im Vergleich mit monomerweichgernachten Dichtungsbahnen ist die ermittelte Fallhöhe deutlich höher. Dieser Effekt kann besonders bei tiefen Temperaturen (-10°C) festgestellt werden. Der Vergleich wurde gemäß der DIN EN 12691 "Bestimmung des Widerstandes gegen stoßartige Belastung" DIN 16726 Abschnitt 5.12 "Verhalten beim Perforationsversuch" durchgeführt. Die beiden Normen legen ein Prüfverfahren zur Bestimmung der Perforation bei stoßartiger (dynamischer) Belastung von Dach- und Dichtungsbahnen bei Normaltemperatur fest. Die Prüfung wurde auch bei tieferen Temperaturen als in diesen Normen angegeben durchgeführt, wobei die Dichtungsbahnen aus den erfindungsgemäßen Zusammensetzungen ebenfalls eine verbesserte Resistenz gegenüber Perforation aufweisen.
Besonders gute Ergebnisse werden erzielt ,wenn Adipinsäurepolyester mit einem mittleren Molekulargewicht von 5.000 bis 8.000 eingesetzt wird.

Ferner enthält die Zusammensetzung zur Herstellung einer Dichtungsbahn ein Polyacrylat. Als erfindungsgemäß einsetzbare Polyacrylate kommen beispielsweise Ethyl-Butylacrylat, Butylacrylat, Copolymere aus Acrylsäure und Vinylchlorid, MMA oder PMMA in Frage Bei den Untersuchungen, die Im Rahmen der vorliegenden Erfindung durchgeführt wurden hat sich überraschenderweise gezeigt, dass der Einsatz speziell der oben genannten Polyacrylate in Kombination mit einem Polymerweichmacher auf Basis eines Adipinsäurepolyesters zu einer Verbesserung der Weichmacherretention führt, also einer Reduzierung des Abbaus bzw. Verlustes von Weichmachern aus der Dichtungsbahn. Dadurch trägt die Polyacrylatkomponente erheblich zur Verbesserung der Alterungs- und Witterungsbeständigkeit der erfindungsgemäßen Dichtungsbahnen bei.
Von den oben genannten Polyacrylaten ist der Einsatz von Butylacrylat besonderes bevorzugt, da dieses Polyacrylat neben einer sehr guten Erhöhung der Weichmacherretention ebenfalls zu einer Verbesserung der Kerbschlagunempfindlichkeit bei niedrigen Temperaturen führt und sich darüber hinaus bei der Herstellung gut in die Mischung aus Grundpolymer und Polymerweichmacher einarbeiten lässt.

Gemäß einer besonders bevorzugten Ausführungsform der Zusammensetzung wird in dieser das Polyacrylat in Form von mit PMMA oder MMA gecoateten Butylacrylat-Teilchen eingesetzt. Diese Butylacrylat-Teilchen haben vorzugsweise eine mittlere Teilchengröße von 100 um oder weniger, bevorzugt von 50 um oder weniger, ganz besonders bevorzugt liegt die mittlere Teilchengröße zwischen 5 und 40 um. Der Einsatz solcher Butylacrylat-Teilchen insbesondere mit den oben genannten Teilchengrößen ist besonders vorteilhaft, da sich diese gecoateten Teilchen sehr gut in die übrigen Bestandteile der erfindungsgemäßen Zusammensetzung einarbeiten lassen.

Ein anderes, ebenfalls bevorzugtes Polyacrylat ist ein Copolymer aus Acrylsäure mit Vinylchlorid insbesondere ein Pfropf-Copolymer aus diesen Verbindungen. Ein Polyacrylat dieser Zusammensetzung zeichnet sich durch eine sehr gute Einarbeitbarkeit in die Mischung aus Grundpolymer und Polymerweichmacher aus, insbesondere da es sich bei dem Grundpolymer um PVC handelt.
Die erfindungsgemäß eingesetzten Polyacrylate haben ein mittleres Molekulargewicht von 5.000 bis 120.000, bevorzugt von 10.000 bis 100.000. Polyacrylate mit solchen mittleren Molekulargewichten sind besonders vorteilhaft, da sie eine gute Weichmacherretention in Bezug auf die eingesetzten Adipinsäurepolyester besitzen. Außerdem können solche Polyacrylate in Bezug auf das Basispolymer zusätzlich noch weichmachende Eigenschaften aufweisen.
Die erfindungsgemäß verwendeten Polyacrylate werden bei den Zusammensetzungen in Anteilen von 3 bis 8 bis 25 Gew.-% eingesetzt. Dichtungsbahnen aus Zusammensetzungen mit solchen Anteilen an Polyacrylaten weisen eine besonders hohe Alterungsbeständigkeit auf und lassen sich auch sehr gut bei niedrigen Temperaturen verarbeiten.
Die im Rahmen dieser Anmeldung angegebenen Werte für das mittlere Molekulargewicht von Polymeren (M_{w}) werden in an sich bekannter Weise über Gel-Permeations-Chromatographie (GPC) bestimmt. Gemäß einer bevorzugten Ausführungsform der vorliegenden Erfindung ist der Adipinsäurepolyester aus Adipinsäure und 1,4-Butandiol aufgebaut. Ein Adipinsäurepolyester dieses Aufbaus hat sich als besonders vorteilhaft in Bezug auf die Alterungsbeständigkeit der erfindungsgemäßen Dichtungsbahnen herausgestellt. Ganz besonders bevorzugt sind hierbei Adipinsäurepolyester dieses Aufbaus, welche als Endgruppen Neopentylglykol aufweisen. Woher die besondere Alterungs- beständigkeit unter Feuchtigkeitseinfluss herrührt ist letztlich nicht geklärt, jedoch wird vermutet, dass Adipinsäurepolyester aus Adipinsäure und 1,4-Butandiol besonders unempfindlich gegenüber Hydrolyse sind.

Die Zusammensetzungen können darüber hinaus weitere Zusätze wie Füllstoffe, Pigmente, Farbstoffe, UV-Stabilisatoren, Thermostabilisatoren, Fungizide und zusätzliche Weichmacher enthalten. Diese zusätzlichen Weichmacher sind bevorzugt polymere Weichmacher, können jedoch auch niedermolekulare Weichmacher sein wie beispielsweise Phthalatweichmacher. Als Weichmacher können außerdem die üblichen aus dem Stand der Technik bekannten mit PVC verträglichen Weichmacher eingesetzt werden. Typische Weichmacher sind beispielsweise Derivate der Sylvinsäure oder Essigsäurederivate wie beispielsweise Cumylphenylacetat, Derivate der Adipinsäure wie Benzyloctyladipat, Dibutyladipat, Diisobutyladipat, Di-(2-ethylhexyl)adipat, Diisononyladipat, Derivate der Azelainsäure, Benzoesäurederivate, Polyphenylderivate, Zitronensäurederivate, epoxidierte Fettderivate, sowie Glycolderivate.

Bevorzugt enthält die Zusammensetzung jedoch weniger als 30 Gew.-% an zusätzlichen Weichmachern, besonders bevorzugt weniger als 15 Gew.-%.

Ferner enthält eine bevorzugte Zusammensetzung nahezu keine niedermolekularen Weichmacher, also beispielsweise weniger als 5 Gew.-%, weniger als 1 Gew.-%, insbesondere weniger als 0,1 Gew.-%.
Zur Erhöhung der Thermostabilität der Dachdichtungsbahnen können zusätzlich aus dem Stand der Technik bekannte Wärmestabilisatoren wie z.B. Pb-Stabilisatoren und/ oder Ba/Zn-Stabilisatoren vorzugsweise Ca/Zn-Stabilisatoren enthalten sein. Daneben können auch zusätzlich noch UV-Stabilisatoren enthalten sein, wie beispielsweise Oxalanilide, Amide, Titandioxid, Ruß, insbesondere Tinuvin® und/ oder Chimasorp®. Üblicherweise sind die Stabilisatoren jeweils in Mengen von 0,01 bis 10, vorzugsweise 0,1 bis 5 Gew.-% enthalten. Üblicherweise übersteigt die Gesamtmenge an Stabilisatoren nicht 20 Gew.-% der Mischung.
Als Füllstoffe können die Dachbahnen die üblichen aus dem Stand der Technik bekannten Füllstoffe enthalten, wie beispielsweise Kreide, Talkum oder Kieselsäuren, besonders bevorzugt ist jedoch Kaolin als Füllstoff. Die Menge an Füllstoffen beträgt 0,5 bis 15, bevorzugt 1 bis 10 Gew.-%.
Daneben können noch weitere übliche Inhaltsstoffe enthalten sein, wie beispielsweise Gleitmittel, vorzugsweise Ca-Stearat, Verarbeitungshilfsmittel, Gelierhilfen, UV-Wandler oder Biozide wie beispielsweise Thiazolinderivate, Tributylzinn, Chlorisothiazolin oder Oxybisphenoxyarsen besonders bevorzugt sind Isothiazolinderivate.
Die Dichtungsbahnweist eine Faserverstärkung aufweisen. Diese Faserverstärkung kann in einem Vlies, einem Gelege und/oder einem Gewebe bestehen. Dabei kann die Faserverstärkung aus Fasern bestehen, die ausgewählt sind aus Glas-Mineral-, Polyester-, Polyamid-, Polyethylen-, Polypropylenfasern oder aus Mischungen von diesen.
Gemäß einer bevorzugten Form der erfindungsgemäßen Dichtungsbahn weist diese ein innen liegendes Vlies auf. Dies ist ein weiterer Vorteil der erfindungsgemäßen Zusammensetzungen, da diese im Gegensatz zu denen bislang im Stand der Technik bekannten Zusammensetzungen mit PVC als Grundpolymer die Einarbeitung eines innen liegenden Vlieses erlauben. Bei den aus dem Stand der Technik bekannten Zusammensetzungen auf PVC-Basis, welche mit Polymerweichmacher weichgestellt werden, führt der Versuch in diese ein innen liegendes Vlies einzuarbeiten dazu, dass sich die Dichtungsbahn leicht entlang der Ebene des Vlieses trennen lässt. Die erfindungsgemäßen Zusammensetzungen sind jedoch in der Lage, das Vliesmaterial bei der Beschichtung besser zu durchdringen, wodurch die Dichtungsbahn einen deutlich gesteigerten inneren Zusammenhalt besitzt.

Bevorzugt weist das eingesetzte Vlies eine Luftdurchlässigkeit von 2.000 l/m²s bis 15.000 l/m²s, bevorzugt 3.000 l/m²s bis 12.000 l/m²s, besonders bevorzugt 4.000 l/m²s bis 10.000 l/m²s, ganz besonders bevorzugt 5.000 l/m²s bis 9.000 l/m²s auf. Die angegebenen Werte für die Luftdurchlässigkeit werden nach der Methode ISO 9237 ermittelt. Solche Vliese werden beim Beschichten mit den erfindungsgemäßen Zusammensetzungen besonders gut von diesen durchdrungen und führen, vor allem bei innen liegendem Einsatz des Vlieses in Dichtungsbahnen zu Produkten, die eine besonders hohe Resistenz gegen Delamination der erfindungsgemäßen Zusammensetzung vom Vlies aufweisen.

Nach einer besonders bevorzugten Ausführungsform der erfindungsgemäßen Dichtungsbahn besitzt diese ein innen liegendes Vlies sowie zusätzlich eine weitere, bevorzugt ebenfalls innen liegende Verstärkung in Form eines Geleges und/oder Gewebes, wobei das Gelege bzw. Gewebe so in die Dichtungsbahn eingebracht wird, dass sich die Vliesschicht näher an der einbaugemäß vorgesehenen Außenseite der Bahn befindet und das Gelege bzw. Gewebe näher an der Innenseite. Dieser Aufbau ist besonders bevorzugt, da die Kerbschlagresistenz beispielsweise durch Hagelschlag einer solchen Dichtungsbahn besonders hoch ist, wenn das Vlies sich von der wahrscheinlichen Kerbschlagrichtung aus betrachtet vor dem Gewebe bzw. Gelege befindet.

Es ist ferner bevorzugt, wenn sowohl Vlies, als auch das Gewebe bzw. das Gelege innen liegend in die Dichtungsbahn eingebracht sind, da diese so vor dem Witterungseinfluss bzw. Feuchtigkeit, unter anderem vor Kondenswasser an der Innenseite der Dichtungsbahn nach dem Einbau, geschützt sind. Außerdem führt der beidseitige Schutz des Vlieses und des Gewebes bzw. Geleges zu einer weiteren Erhöhung der Kerbschlagzähigkeit.

Die erfindungsgemäßen Dichtungsbahnen mit innen liegendem Vlies können auf verschiedenen Art und Weise hergestellt werden. Eine Möglichkeit besteht darin, ein Vlies zunächst von der Oberseite mit einer Schmelze der erfindungsgemäßen Zusammensetzung zu beschichten, beispielsweise aus einer Breitschlitzdüse eines Extruders oder aus einem Kalander. In einem zweiten Schritt wird das bereits einseitig beschichtete Vlies herumgedreht und auf der anderen Seiten ebenfalls mit einer Schmelze der erfindungsgemäßen Zusammensetzung auf dem oben genannten Wege beschichtet.

Eine weitere Möglichkeit besteht darin, die Vliesbahn (ggf. in Kombination mit dem Gelege und/ oder Gewebe) gleichzeitig zu beschichten. Dazu wird die Vliesbahn senkrecht geführt und auf beiden Seiten beispielsweise über die Breitschlitzdüse eines Extruders beschichtet.

Bei beiden Verfahrensvarianten ist es ebenso möglich, dass lediglich eine Seite des Vlieses mit der erfindungsgemäßen Zusammensetzung beschichtet wird, bevorzugt die Seite der Dichtungsbahn, die später den stärkeren Witterungseinflüssen ausgesetzt ist, und die andere Seite der Dichtungsbahn beispielsweise mit einer herkömmlichen Zusammensetzung auf PVC-Basis mit niedermolekularen Weichmachern versehen beschichtet wird. Dadurch kann eine Dichtungsbahn mit einseitig guter Witterungsbeständigkeit zu verhältnismäßig geringen Kosten hergestellt werden. Dies kann für einige Anwendungszwecke völlig ausreichend sein. In vorteilhafter Weise können die witterungsbeständige Außenseite und die Innenseite entsprechend gekennzeichnet sein durch einen Aufdruck. Zur Kennzeichnung, dass es sich tatsachlich um verschiedene Materialien handelt, können die beiden Seiten auch unterschiedlich eingefärbt werden. Beispielsweise kann die witterungsbeständige Außenseite aus der erfindungsgemäßen Zusammensetzung heller eingefärbt werden. Dadurch kann gleichzeitig zu der Kenntlichmachung der Außenseite eine übergebührliche Erhitzung durch Sonneneinstrahlung durch die helle Farbgebung verhindert werden. In analoger Weise können auch Kombinationseinlagen aus Vlies und Gewebe und/ oder Gelege beschichtet werden.

Die Erarbeitung eines innen liegenden Vlieses ggf. auch in Kombination mit einem Gelege und/oder Gewebe in die Dichtungsbahn bedingt eine Reihe vorteilhafter Eigenschaften wie verbesserte Reißfestigkeit, eine gute Brandschutzresistenz insbesondere bei der Verwendung von Glasvliesen, sowie eine weitere Steigerung der Kerbschlagzähigkeit. Im Vergleich zu einseitig beschichteten Vliesen sind weitere Vorteile zu nennen wie die Tatsache, dass sich aus einseitig beschichteten Dichtungsbahnen beim Verarbeiten leicht Fasern herauslösen können, die möglicherweise zu Hautirritationen führen. Ferner lassen sich Dichtungsbahnen mit einseitig beschichtetem Vlies an den Übergangsstellen schlechter Verschweißen, da wie oben dargestellt die bislang bekannten Zusammensetzungen auf PVC-Basis nicht in der Lage sind eine Vlieseinlage sicher zu durchdringen. Daher können solche Bahnen nicht überlappend durch Erwärmung miteinander verschweißt werden, sondern erfordern den Einsatz von Verbindungsstücken, die über die auf Stoß aneinander gelegten Dichtungsbahnen miteinander verbinden. Ein weiterer Vorteil ist darin begründet, dass bei innen liegendem Vlies auch in Kombination mit einem Gelege und/ oder Gewebe diese Faserverstärkung vollständig vor Feuchtigkeit geschützt ist.

Die Dichtungsbahn ist zumindest
an einer Seite mit einer kaltselbstklebenden Schicht ausgestattet. Dies ist besonders vorteilhaft, da hierdurch die Dichtungsbahn auf beliebige Untergründe vor allem im Baubereich, insbesondere Beton und dergleichen aufgebracht werden kann. Hierzu kommen prinzipiell alle dem Fachmann für diese Einsatzzwecke bekannten kaltselbstklebenden Materialien in Betracht, wobei kaltselbstklebende Beschichtungen auf Bitumenbasis, insbesondere aber kaltselbstklebende Beschichtungen auf Butylkautschukbasis besonders bevorzugt sind.

Alternativ kann die erfindungsgemäße Dichtungsbahn wenigstens auf einer Seite mit einem Haftklebstoff beschichtet sein. In diesem Falle kommen die an sich bekannten Haftklebstoffsysteme in Frage, insbesondere Acrylatklebstoffe oder auch Klebstoffe auf Polyurethanbasis.

Es ist ebenso möglich, die kaltselbstklebende Beschichtung oder der Haftklebstoff auch auf beiden Seiten der Dichtungsbahn vorzusehen, ebenso ist es möglich, eine Seite der Dichtungsbahn mit einer kaltselbstklebenden Beschichtung auszurüsten und die andere Seite der Dichtungsbahn mit einem Haftklebstoff.

Die kaltselbstklebende Beschichtung oder der Haftklebstoff können auf die erfindungsgemäße Dichtungsbahn nahezu vollflächig aufgetragen werden oder aber auch in Streifenform, beispielsweise in Längsstreifen, welche weitestgehend parallel zur Produktionsrichtung der Bahn verlaufen. Ebenso ist ein punktförmiger Auftrag möglich.

Eine weitere Möglichkeit besteht darin, dass die kaltselbstklebende Schicht oder die Haftklebstoffschicht strukturiert bzw. profiliert ist. Dies kann beispielsweise dadurch erfolgen, dass in der kaltselbstklebenden Schicht bzw. der Haftklebstoffschicht Nuten ausgebildet sind, wobei der Nutboden ebenso wie die Stege der Nuten jeweils durch die kaltselbstklebende Beschichtung bzw. den Haftklebstoff gebildet werden. Dies ist besonders vorteilhaft, wenn die erfindungsgemäße Dichtungsbahn auf der mit dem Klebstoff zu beschichtenden Seite eine Faserverstärkung aufweist. Diese Faserverstärkung kann dabei in einem Vlies, einem Gewebe und/oder einem Gelege bestehen. Durch den strukturierten Klebstoffauftrag in der Art und Weise, dass in der kaltselbstklebenden bzw. Haftklebstoffschicht Nuten ausgebildet sind, befindet sich am Nutboden ebenfalls Klebstoff. Dadurch wird eine durchgehende Klebeschicht realisiert, die die Faserverstärkung vor Außeneinflüssen schützt. Insbesondere kann durch eine solche Strukturierung der Klebstoffschicht ein Hinterlüften der Dichtungsbahn beim Verkleben beispielsweise auf Flachdächern erreicht werden, wobei gleichzeitig die auf der Unterseite befindliche Faserverstärkung durch die durchgehende Klebstoffschicht vor dem sich möglicherweise an der Unterseite der Dichtungsbahn bildenden Kondenswasser geschützt wird.

Üblicherweise wird die mit einer kaltselbstklebenden Schicht oder einer Haftklebstoffschicht ausgestattete Dichtungsbahn mit einer abziehbaren Schutzfolie abgedeckt und so vor Verschmutzungen bewahrt. Die Schutzfolie kann eine Polymerfolie sein, welche mit einem Antihaftmittel versehen ist oder ein siliconisiertes Papier. Es kann dabei vorgesehen sein, dass insbesondere bei Dichtungsbahnen, welche nahezu vollflächig, d. h. bis an die Randbereiche mit einer Klebeschicht ausgestattet sind, dass die Schutzfolie jeweils über die Randbereiche der eigentlichen Dichtungsbahn hinaus steht. Dadurch kann verhindert werden, dass die sich durch das Aufrollen der Dichtungsbahn möglicherweise seitlich herausdrückende Haftklebemasse die Rollen der Dichtungsbahn an den Längsseiten klebrig macht (unerwünschter Side-Tack). Die Schutzfolie kann zum Zweck der leichteren Entfernung durch einfache oder mehrfache Schlitzungen oder Perforationen unterteilt sein.

Ein weiterer Gegenstand der vorliegenden Erfindung ist die Verwendung einer erfindungsgemäßen Dichtungsbahn zum Abdichten im Baubereich, insbesondere im Dachbereich hierbei vor allem von Flachdächern, im Keller oder auch im Fassadenbereich. Ebenfalls können die erfindungsgemäßen Dichtungsbahnen zum Abdichten von Übergangen verwendet werden, die sich beispielsweise zwischen zwei aneinandergrenzenden Betonplatten ergeben oder aber auch zwischen einem Fenster- oder Türrahmen und dem Mauerwerk, sowie ferner zum Abdichten von Rissen im Mauerwerk.

### Beispiele:

Die vorliegende Erfindung wird im Folgenden anhand von Beispielen näher erörtert. Die Tests wurden jeweils anhand der oben beschriebenen Testmethoden durchgeführt:

Es wurden Vergleichsuntersuchungen mit einer rein polymerweichgemachten Dichtungsbahn 1 (ca. 50 % Polyvinylchlorid, 35 % Polymerweichmacher) gemäß dem Stand der Technik mit zwei verschiedenen erfindungsgemäßen Dichtungsbahnen durchgeführt. Diese erfindungsgemäßen Dichtungsbahnen sind zum einen eine polyacrylatmodifizierte Dichtungsbahn 2 (38 % PVC, 10 % Polyacrylat und 28 % Adipinsäurepolyester als Polymerweichmacher mit einem mittleren Molekulargewicht von 6.500) und einer mit einem Propfcopolymerisat ausgerüsteten Dichtungsbahn 3 (30 % PVC, 20 % eines PVC-Acrylat-Pfropfcopolymerisats mittleren Molekulargewicht von etwa 57.000, 28 % Adipinsäurepolyester als Polymerweichmacher mit einem mittleren Molekulargewicht von 6.500). Die Dichtungsbahnen werden gemäß den oben beschriebenen Herstellungsverfahren aus diesen Mischungen extrudiert, wobei die Dicke sämtlicher Bahnen 1,5 mm beträgt.

Ein Vergleich der Ergebnisse zur Ermittlung des Perforationsverhaltens zeigt, dass die erfindungsgemäßen Dichtungsbahnen eine deutlich verbesserte Perforationsresistenz zeigen als die aus dem Stand der Technik bekannte Dichtungsbahn. Ebenso zeigt sich bei diesem Test, dass bei tiefen Temperaturen von -40°C die polyacrylatmodifizierte Dichtungsbahn eine Fallhöhe von 500 mm besteht. Die Dichtungsbahn nach dem Stand der Technik versagt bereits bei -30°C.

Für die folgenden Versuche wird die Zusammensetzung gemäß der oben beschriebenen Dichtungsbahn 3 für die Herstellung einer Dichtungsbahn mit einer Kombinationsträgereinlage (bestehend aus einem Glasvlies (35 g/m²) und einem Glasgittergelege (2x2)) verwendet und anschließend Versuchen zur Ermittlung des Perforationsverhaltens, der Schlagzugzähigkeit der Kältebruchtemperatur unterzogen:

Werte einer Bahn mit alleiniger unterseitiger Kaschierung durch eine Kombinationsträgereinlage:

| | | | |
|---|---|---|---|
| Verhalten beim Perforationsversuch [mm] | 5.2.10 | bei R.T. | 500 mm |
| | Verfahren A | bei -10°C | 750 mm |
| | (Aluminumplatte) | bei - 20°C | 500 mm |
| Verhalten beim Perforationsversuch [mm] | 5.2.10 | bei R.T. | 750 mm |
| | Verfahren B | bei -10°C | 300 mm |
| | (expand. PS) | bei -20°C | -.- |
| Verhalten beim Perforationsversuch [mm] | 5.2.10 | bei R.T. | 750 mm |
| | (Mineralfaserdämmplatte) | bei -10°C | 750 mm |
| | | bei -20°C | 300 mm |

Die folgenden Ergebnisse beziehen sich auf eine Dichtungsbahn der Zusammensetzung gemäß der Dichtungsbahn 3, ausgerüstet mit einer mittigen Kombinationsträgereinlage. Hierbei wird der Widerstand gegen stoßartige Belastung bei Raumtemperatur (RT) und bei -10°C nach EN 12691 auf Aluminiumplatte, expandiertem Polystyrol und Mineralfaserdämmplatte bestimmt:

| EN 12691 Verfahren A Aluminiumplatte R.T. | EN 12691 Verfahren A Aluminiumplatte -10°C | EN 12691 Verfahren B Polystyrol R.T. | EN 12691 Verfahren B Polystyrol -10°C | EN 12691 Mineralfaserdämmplatte R.T. | EN 12691 Mineralfaserdämmplatte -10°C |
|---|---|---|---|---|---|
| bestanden 750 mm | bestanden 750 mm | bestanden 750 mm | bestanden 750 mm | bestanden 750 mm | bestanden 750 mm |

Als weiterem Vergleichstest wird diese Dichtungsbahn mit einer Zusammensetzung gemäß der Dichtungsbahn 3 mit Kombinationsträgereinlage einer Prüfung "Falzen in der Kälte" nach EN 495-5 unterzogen. Dabei zeigt sich, dass das Material bei lediglich unterseitiger Ausrüstung mit einer Kombinationsträgereinlage diese Prüfung nur bei - 20°C besteht; eine Dichtungsbahn mit mittiger Ausrüstung besteht die Prüfung sogar noch bei -30°C. Hieraus wird der besondere Vorteil deutlich, der sich aus der Möglichkeit ergibt, PVC-Bahnen mit einem innen liegenden Vlies bzw. einer Kombinationsträgereinlage auszustatten gegenüber den herkömmlichen Bahnen, welche nur einseitig mit einer solchen Verstärkung versehen werden konnten. Wie oben erläutert wird erst durch den Einsatz der Zusammensetzungen die Herstellung von PVC-Dichtungsbahnen möglich, die die Einarbeitung eines innen liegenden Vlieses bzw. einer Kombinationsträgereinlage erlauben. Daher können erst mit Hilfe der erfindungsgemäßen Zusammensetzungen Dichtungsbahnen hergestellt werden, die den oben beschriebenen Belastungen standhalten.

## Patentansprüche

1. Dichtungsbahn
**dadurch gekennzeichnet,**
**dass** die Dichtungsbahn eine Zusammensetzung aufweist enthaltend ein Grundpolymer, einen polymeren Weichmacher sowie ein Polyacrylat, wobei das Grundpolymer Polyvinylchlorid ist, und der polymere Weichmacher ein Adipinsäurepolyester mit einem mittleren Molekulargewicht von 5.000 bis 8.000 ist und die Zusammensetzung zwischen 8 Gew.-% und 25 Gew.-% an Polyacrylat enthält,
**dass** die Dichtungsbahn eine Faserverstärkung aufweist, und
**dass** die Dichtungsbahn zumindest an einer Seite mit einer kaltselbstklebenden Schicht ausgestattet ist.

2. Dichtungsbahn nach Anspruch 1,
**dadurch gekennzeichnet,**
**dass** die Faserverstärkung ein Vlies, ein Gelege und/ oder ein Gewebe umfasst.

3. Dichtungsbahn nach Ansprüche 1 oder 2,
**dadurch gekennzeichnet,**
**dass** die Dichtungsbahn ein innen liegendes Vlies aufweist.

4. Dichtungsbahn nach Anspruch 3,
**dadurch gekennzeichnet,**
**dass** das Vlies eine Luftdurchlässigkeit von 2.000 l/m²s bis 15.000 l/m²s, bevorzugt 3.000 !/m²s bis 12.000 !/m²s aufweist.

5. Dichtungsbahn nach Anspruch 1,
**dadurch gekennzeichnet,**
**dass** das Polyacrylat ein Ethyl-Butyl-Acrylat, ein Butyl-Acrylat, ein Ethylen-Acrylat, ein Copolymer aus Acrylsäure und Vinylchlorid, MMA, PMMA oder eine Mischung von diesen umfasst.

6. Dichtungsbahn nach Anspruch 1,
**dadurch gekennzeichnet,**
**dass** das Polyacrylat in Form von mit PMMA gecoateten Butylacrylat-Teilchen eingesetzt wird.

7. Dichtungsbahn nach Anspruch 1,
**dadurch gekennzeichnet,**
**dass** das Polyacrylat ein Propfcopolymer aus Acrylsäure und Vinylchlorid ist

8. Dichtungsbahn nach Anspruch 1,
**dadurch gekennzeichnet,**
**dass** die Zusammensetzung zwischen 20 und 60 Gew-%, bevorzugt zwischen 25 und 40 Gew.-% an Grundpolymer enthält.

9. Dichtungsbahn nach Anspruch 1,
**dadurch gekennzeichnet,**
**dass** die Zusammensetzung zwischen 20 und 45 Gew.-%, bevorzugt zwischen 25 und 35 Gew.-% an Adipinsäurepolyester enthält.

10. Verwendung einer Dichtungsbahn nach einem der Ansprüche 1 bis 9 zum Abdichten im Baubereich.

## Claims

1. Sealing web
**characterized in that**
the sealing web has a composition containing a base polymer, a polymeric plasticiser and a polyacrylate, wherein polyvinyl chloride is the base polymer and the polymeric plasticiser is an adipic acid polyester having a mean molecular weight of 5,000 to 8,000 and the composition contains between 8 % w/w and 25 % w/w polyacrylate,
that the sealing web has a fibre reinforcement, and
that the sealing web is provided at least on one side with a cold self-adhesive layer.

2. Sealing web according to Claim 1,
**characterized in that**
the fibre reinforcement comprises a fleece, a roving and/or a tissue.

3. Sealing web according to Claim 1 or 2,
**characterized in that**
the sealing web has an internal fleece.

4. Sealing web according to Claim 3,
**characterized in that**
the fleece has a permeability to air of 2,000 l/m²s to 15,000 l/m²s, preferably 3,000 l/m²s to 12,000 l/m²s.

5. Sealing web according to Claim 1,
**characterized in that**
the polyacrylate comprises an ethyl butyl acrylate, a butyl acrylate, an ethylene acrylate, a copolymer of acrylic acid and vinyl chloride, MMA, PMMA or a mixture thereof.

6. Sealing web according to Claim 1,
**characterized in that**
the polyacrylate is introduced in the form of butyl acrylate particles coated with PMMA.

7. Sealing web according to Claim 1,
**characterized in that**
the polyacrylate is a graft copolymer of acrylic acid and vinyl chloride.

8. Sealing web according to Claim 1,
**characterized in that**
the composition contains between 20 % and 60 % w/w, preferably between 25 % and 40 % w/w base polymer.

9. Sealing web according to Claim 1,
**characterized in that**
the composition contains between 20 % and 45 % w/w, preferably between 25 % and 35 % w/w adipic acid polyester.

10. Use of a sealing web according to one of Claims 1 to 9 for sealing in the construction sector.

## Revendications

1. Bande d'étanchéité
**caractérisée en ce**
**que** la bande d'étanchéité présente une composition comprenant un polymère de base, un plastifiant polymère et un polyacrylate, ledit polymère de base étant un polychlorure de vinyle, ledit plastifiant polymère étant un polyester d'acide adipique présentant un poids moléculaire moyen compris entre 5 000 et 8 000 et ladite composition contenant entre 8 % et 25 % en poids de polyacrylate, que la bande d'étanchéité présente un renforcement par fibres, et
**que** la bande d'étanchéité est dotée au moins sur un côté d'une couche autocollante à froid.

2. Bande d'étanchéité selon la revendication 1,
**caractérisée en ce**
**que** le renforcement par fibres comprend un non-tissé, une nappe et/ou un tissu.

3. Bande d'étanchéité selon la revendication 1 ou 2,
**caractérisée en ce**
**que** la bande d'étanchéité présente un non-tissé sur la face intérieure.

4. Bande d'étanchéité selon la revendication 3,
**caractérisée en ce**
**que** le non-tissé présente une perméabilité à l'air comprise entre 2 000 l/m²s et 15 000 l/m²s, mais de préférence entre 3 000 l/m²s et 12 000 l/m²s.

5. Bande d'étanchéité selon la revendication 1,
**caractérisée en ce**
**que** le polyacrylate comprend un acrylate d'éthyle-butyle, un acrylate de butyle, un acrylate d'éthylène, un copolymère constitué d'acide acrylique et de chlorure de vinyle, un MMA, un PMMA ou un mélange de ces composants.

6. Bande d'étanchéité selon la revendication 1,
**caractérisée en ce**
**que** le polyacrylate est utilisé sous la forme de particules d'acrylate de butyle enrobées de PMMA.

7. Bande d'étanchéité selon la revendication 1,
**caractérisée en ce**
**que** le polyacrylate est un copolymère greffé constitué d'acide acrylique et de chlorure de vinyle.

8. Bande d'étanchéité selon la revendication 1,
**caractérisée en ce**
**que** la composition contient entre 20 % et 60 % en poids et même de préférence entre 25 % et 40 % en poids de polymère de base.

9. Bande d'étanchéité selon la revendication 1,
**caractérisée en ce**
**que** la composition contient entre 20 % et 45 % en poids et même de préférence entre 25 % et 35 % en poids de polyester d'acide adipique.

10. Utilisation d'une bande d'étanchéité selon une des revendications 1 à 9 pour étancher dans le domaine de la construction.
